(19) Europäisches Patentamt
European Patent Office
Office européen des brevets

(11) **EP 3 247 992 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(21) Anmeldenummer: **16700868.9**

(22) Anmeldetag: **11.01.2016**

(51) Int Cl.:
*G01N 21/47* (2006.01)       *G01N 21/55* (2014.01)
*G01N 21/25* (2006.01)       *G01N 21/86* (2006.01)
*A47L 9/30* (2006.01)

(86) Internationale Anmeldenummer:
**PCT/EP2016/050337**

(87) Internationale Veröffentlichungsnummer:
**WO 2016/116309 (28.07.2016 Gazette 2016/30)**

(54) **REINIGUNGSGERÄT ZUR REINIGUNG EINER OBERFLÄCHE**

CLEANING DEVICE FOR CLEANING A SURFACE

APPAREIL DE NETTOYAGE D'UNE SURFACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2015 DE 102015100977**

(43) Veröffentlichungstag der Anmeldung:
**29.11.2017 Patentblatt 2017/48**

(73) Patentinhaber: **Vorwerk & Co. Interholding GmbH
42275 Wuppertal (DE)**

(72) Erfinder: **WINDORFER, Harald
40822 Mettmann (DE)**

(74) Vertreter: **Müller, Enno et al
Rieder & Partner mbB
Patentanwälte - Rechtsanwalt
Corneliusstrasse 45
42329 Wuppertal (DE)**

(56) Entgegenhaltungen:
**EP-A1- 1 241 465        EP-A1- 1 494 017
EP-A1- 1 677 099        EP-A2- 2 741 483
JP-A- 2002 174 595      JP-A- 2006 105 774
US-A- 5 650 702         US-A- 5 864 394
US-A1- 2005 168 729     US-A1- 2009 257 058**

**Beschreibung**

Die Erfindung betrifft ein Reinigungsgerät, insbesondere einen Reinigungsroboter, zur Bearbeitung einer Oberfläche, wobei das Gerät eine optische Messeinrichtung zur Bestimmung der Art der Oberfläche aufweist.

Geräte dieser Art sind im Stand der Technik hinreichend bekannt. Beispielsweise handelt es sich um Saug- oder Wischroboter, welche autonom eine zu reinigende Oberfläche abfahren können und dabei Reinigungsaufgaben wie Saugen, Wischen oder ähnliches vornehmen. Um die Art der Bearbeitung der jeweiligen Art der Oberfläche anzupassen, ist eine optische Messeinrichtung vorgesehen, welche vor dem Bearbeitungsvorgang zuerst die Art der Oberfläche ermittelt. Hierdurch wird beispielsweise erreicht, dass bestimmte Bereiche eines Raumes von einer Bearbeitung ausgeschlossen werden, weil deren Oberfläche dafür nicht geeignet ist. Bei einem Wischroboter kann es beispielsweise vorgesehen sein, dass Teppiche von einer Nassreinigung ausgeschlossen werden. Darüber hinaus können beispielsweise in Bezug auf einen Saugroboter Gebläseleistung und Bürstleistung auf die jeweilige Oberfläche angepasst werden. Ebenso können Dichtlippen oder Stützrollen in Abhängigkeit von der jeweiligen Oberfläche verstellt werden.

Zur Bestimmung der Art der Oberfläche sind im Stand der Technik unterschiedliche optische Messeinrichtungen bekannt. Häufig werden bildgebende Messeinrichtungen verwendet, welche mittels eines Kamerasystems ein Bild der Oberfläche aufnehmen und mit Referenzbildern oder Referenzmerkmalen vergleichen. Der technische Aufwand für das Kamerasystem sowie die Bildverarbeitung zur Auswertung der Bilder ist entsprechend hoch. Darüber hinaus sind Glanzmessgeräte bekannt, bei welchen der Glanz der Oberfläche gemessen wird. Nachteilig ist dabei, dass diese Messeinrichtungen nur dann ein zuverlässiges Messergebnis liefern, wenn die zu messende Oberfläche vollständig gegen Umgebungslicht abgeschottet wird. Insofern erfordert eine derartige Messeinrichtung einen größeren apparativen Aufwand. EP1677099, US5650702, EP2741483 und JP2002174595 beschreiben Beispiele aus dem Stand der Technik.

Es ist daher Aufgabe der Erfindung, ein Oberflächenbearbeitungsgerät mit einer optischen Messeinrichtung zur Bestimmung der Art der Oberfläche zu schaffen, die mit wenig technischem Aufwand eine zuverlässige Bestimmung der Art der Oberfläche ermöglicht.

Zur Lösung schlägt die Erfindung ein Reinigungsgerät zur Bearbeitung einer Oberfläche vor, bei welchem die optische Messeinrichtung eine Lichtquelle und mindestens zwei Lichtsensoren aufweist, wobei die Lichtquelle und ein erster Lichtsensor so angeordnet sind, dass von der Lichtquelle emittiertes Licht mit einem Einfallswinkel auf einen Reflexionspunkt der Oberfläche trifft und anschließend mit einem entsprechenden Ausfallswinkel zu dem ersten Lichtsensor reflektiert wird, wobei die Lichtquelle, der Reflexionspunkt und der erste Lichtsensor eine Einfallsebene aufspannen, und wobei senkrecht zu der Oberfläche eine den Reflexionspunkt schneidende, einen zweiten Lichtsensor aufweisende Sekundärebene aufgespannt ist, die einen Winkel zwischen 80° und 100° zu der Einfallsebene aufweist, wobei eine durch den Reflexionspunkt und den zweiten Lichtsensor verlaufende Gerade einen Winkel zu der Oberfläche aufweist, welcher im Wesentlichen so groß ist wie der Einfallswinkel bzw. der Ausfallswinkel.

Gemäß der Erfindung werden nun mittels des ersten Lichtsensors und des zweiten Lichtsensors voneinander verschiedene Lichtintensitäten gemessen, wobei der erste Lichtsensor den von dem Reflexionspunkt reflektierten Lichtanteil des von der Lichtquelle emittierten Lichtes misst und der zweite Lichtsensor einen diffus gestreuten Lichtanteil. Der gestreute Lichtanteil kann dabei sowohl ein Anteil des von der Lichtquelle auf den Reflexionspunkt gestrahlten Lichtes sein (insbesondere wenn die Oberfläche nicht glatt ist) als auch ein Anteil des Umgebungslichtes (beispielsweise Deckenbeleuchtung eines Raumes).

Insgesamt ist die so aufgebaute optische Messeinrichtung geeignet, ein Messverfahren nach dem sogenannten Phong-Beleuchtungsmodell auszuführen, welches unter verschiedenen Bedingungen von den Lichtsensoren gemessene Intensitäten auswertet. Das Phong-Beleuchtungsmodell ist ein Beleuchtungsmodell, welches für die 3D-Computergrafik verwendet wird, um eine Beleuchtung von Objekten zu berechnen. Das Phong-Modell ist für die Berechnung der Beleuchtung von glatten Oberflächen bekannt, wobei es sich im Rahmen der Erfindung überraschenderweise herausgestellt hat, dass dieses Modell auch zur Unterscheidung von glatten und nicht glatten Oberflächen geeignet ist. Es handelt sich bei diesem Beleuchtungsmodell zwar um ein empirisches Modell, das im Wesentlichen nicht auf physikalischen Prinzipien beruht. Dennoch ist es geeignet, Oberflächenarten zuverlässig voneinander zu unterscheiden.

Die optische Messeinrichtung ist dabei erfindungsgemäß so aufgebaut, dass sich die nach dem Phongschen Beleuchtungsmodell berücksichtigten Lichtanteile messen lassen. Hierzu zählt zum einen der an dem Reflexionspunkt reflektierte Lichtanteil des emittierten Lichtes. Die Lichtquelle, der Reflexionspunkt und der erste Licht-sensor spannen die Einfallsebene auf, während der zweite Lichtsensor und der Reflexionspunkt in einer dazu senkrecht stehenden Sekundärebene angeordnet sind, welche ebenfalls senkrecht zu der Oberfläche steht. Die Sekundärebene und die Einfallsebene spannen einen Winkel zwischen 80° und 100° auf. Zu beachten ist dabei, dass der erste Lichtsensor und der zweite Lichtsensor unter gleichem Winkel zu der Oberfläche angeordnet sind, so dass die von dem ersten bzw. zweiten Lichtsensor gemessenen Lichtanteile in Bezug auf deren Intensität miteinander vergleichbar sind. Insbesondere empfiehlt es sich, dass der erste Lichtsensor und der zweite Lichtsensor einen gleichen Abstand zu dem Reflexionspunkt aufweisen. Dadurch lässt sich die Messgenauigkeit weiter erhöhen. Insbesondere können der erste Lichtsensor und der zweite Lichtsensor in einer gemeinsamen Ebene angeordnet sein, welche parallel zu der Oberfläche angeordnet ist. Vorteilhaft befindet sich auch die Lichtquelle in derselben Ebene, so dass eine Justage des Messaufbaus besonders einfach und schnell möglich ist. Dies trägt insbesondere zu einer schnellen und kostengünstigen Herstellung der optischen Messeinrichtung und damit auch des Bearbeitungsgerätes bei.

Es empfiehlt sich, dass der Einfallswinkel, der Ausfallswinkel und der Winkel des zweiten Lichtsensors zu der Oberfläche jeweils zwischen 30° und 45° betragen. Dadurch kann das von der Lichtquelle der optischen Messeinrichtung emittierte Licht von einer Umgebungsbeleuchtung, beispielsweise einer Deckenbeleuchtung des Raumes, unterschieden werden, da das Umgebungslicht üblicherweise einen größeren Einfallswinkel zu der Oberfläche aufweist.

Es empfiehlt sich, dass der Winkel zwischen der Einfallsebene und der Sekundärebene 90° beträgt. Dabei kann dieser Winkel auch eine geringfügige Abweichung von wenigen Grad aufweisen, ohne dass das Messergebnis wesentlich beeinflusst wird. Angestrebt wird allerdings eine Genauigkeit von $^+/_-$ 3°. Durch die zueinander senkrechte Ausrichtung der Einfallsebene und der Sekundärebene kann das von dem Reflexionspunkt reflektierte Licht von dem grundsätzlich in alle Richtungen gestreuten Streulicht unterschieden werden.

Vorteilhaft werden die Intensitäten der von der Oberfläche reflektierten bzw. gestreuten Lichtanteile mit zwei Lichtsensoren gemessen. Die Lichtsensoren können beispielsweise Fotodioden, Kamerachips oder ähnliches sein. Die Lichtsensoren sind unter gleichem Winkel zu der beleuchteten Oberfläche ausgerichtet, wobei der erste Lichtsensor, relativ zu dem Reflexionspunkt, der Lichtquelle genau gegenüberliegend angeordnet ist, so dass das Licht bei einer glatten Oberfläche unter der Bedingung "Einfallswinkel gleich Ausfallswinkel" direkt auf den ersten Lichtsensor reflektiert wird. Der zweite Lichtsensor ist unter einem ebenso großen Winkel zu der Oberfläche auf den Reflexionspunkt gerichtet, in Bezug auf die Einfallsebene jedoch in der um ca. 90° dazu gedrehten Sekundärebene angeordnet.

Im Sinne einer Bestimmung der Art der Oberfläche mittels des Phongschen Beleuchtungsmodells ist das Gerät insgesamt so ausgebildet, dass in aufeinanderfolgenden Messschritten verschiedene Lichtanteile mittels der Lichtsensoren gemessen werden können. Die Auswertung der gemessenen Lichtintensitäten erfolgt vorteilhaft mit einer Auswerteeinrichtung des erfindungsgemäßen Gerätes, wobei Messung und Auswertung auf der vereinfachten Annahme beruhen, dass sich die Lichtintensität insgesamt aus dem Umgebungslicht, dem diffus gestreuten Licht und dem reflektierten Licht zusammensetzt, d. h. nach der mathematischen Gleichung

$$I_{Umgebung} + I_{diffus} + I_{reflektiert} = I_{Gesamt}$$

Ein Messzyklus des Gerätes umfasst dabei, folgende drei Messschritte:

1. Messung von $I_{Umgebung}$ mittels des ersten Lichtsensors und des zweiten Lichtsensors bei ausgeschalteter Lichtquelle.

2. Messung von $I_{Umgebung}$ + $I_{diffus}$ + $I_{reflektiert}$ mittels des ersten Lichtsensors bei eingeschalteter Lichtquelle.

3. Messung von $I_{Umgebung}$ + $I_{diffus}$ mittels des zweiten Lichtsensors bei eingeschalteter Lichtquelle.

Ausgehend von den gemessenen Lichtintensitäten kann die Auswerteeinrichtung des Gerätes im Vergleich mit entsprechenden Referenzintensitäten bekannter Oberflächen auf die Art der aktuell gemessenen Oberfläche schließen.

Des Weiteren wird vorgeschlagen, dass die Lichtquelle eine polychromatische Lichtquelle, insbesondere eine Weißlichtquelle, ist. Die polychromatische Lichtquelle emittiert Lichtanteile unterschiedlicher Wellenlängen, welche unabhängig voneinander ausgewertet werden können. Es kann somit eine erste Auswertung in Bezug auf eine erste Wellenlänge durchgeführt werden, eine zweite Auswertung in Bezug auf eine zweite Wellenlänge usw. Da die zu messende Oberfläche gegebenenfalls Licht unterschiedlicher Wellenlänge mit einem unterschiedlichen Reflexionsgrad reflektiert, können so weitere Informationen über die zu bestimmende Oberfläche erlangt werden.

In diesem Zusammenhang empfiehlt es sich, dass die Lichtsensoren wellenlängenselektiv ausgebildet sind. Insbesondere können die Lichtsensoren RGB-Sensoren sein oder nicht wellenlängenselektive Sensoren, beispielsweise Fotodioden, welche mit entsprechenden Filtern ausgestattet sind, so dass die Lichtanteile unterschiedlicher Wellenlänge voneinander getrennt detektiert werden können.

In diesem Zusammenhang kommen unterschiedliche Messanordnungen in Frage. Bei einer ersten möglichen Anordnung kann beispielsweise eine Weißlichtquelle Licht emittieren, welches an dem Reflexionspunkt der Oberfläche reflektiert wird und dann von einem RGB-Sensor in die Wellenlängenanteile rot, grün, blau aufgeteilt wird. Alternativ können mehrere nicht wellenlängenselektive Fotodioden nebeneinander angeordnet sein, wobei jeder Fotodiode ein Spektralfilter zugeordnet ist, welcher sich von den Spektralfiltern der anderen Fotodioden unterscheidet. Darüber hinaus kann in einer weiteren Anordnung die Lichtquelle eine gepulste RGB-Lichtquelle sein, welche in zeitlich aufeinanderfolgenden Zeitabschnitten Licht unterschiedlicher Wellenlänge emittiert. Während einer ersten Zeitspanne wird dann beispielsweise ein roter Lichtanteil emittiert, welcher auf den Lichtsensor trifft, danach in einer zweiten Zeitspanne ein grüner Lichtanteil und in einer dritten Zeitspanne ein blauer Lichtanteil. Anschließend kann eine Wiederholung dieser Messsequenz erfolgen. Die Auswerteeinrichtung des Gerätes kann den gemessenen Intensitäten eine entsprechende Information über die in der jeweiligen Zeitspanne emittierte Wellenlänge zuordnen. Die Frequenz, mit welcher sich der Messzyklus wiederholt, richtet sich nach der Art der verwendeten Lichtquelle und der Lichtsensoren. Beispielsweise kann ein Messzyklus nur wenige Millisekunden in Anspruch nehmen.

Neben dem zuvor erläuterten Gerät zur Bearbeitung einer Oberfläche schlägt die Erfindung ebenfalls ein Verfahren zur Reinigung einer Oberfläche mittels eines Reinigungsgerät vor, wobei das Reinigungsgerät die Art der Oberfläche mittels einer optischen Messeinrichtung bestimmt und abhängig davon die Art der Reinigung anpasst. Das Verfahren kann insbesondere mittels eines zuvor vorgeschlagenen Gerätes ausgeführt werden. Erfindungsgemäß wird Licht innerhalb einer Einfallsebene von einer Lichtquelle unter einem Einfallswinkel auf einen Reflexionspunkt der Oberfläche gestrahlt und von dort mit einem entsprechenden Ausfallswinkel zu einem ersten Lichtsensor reflektiert, wobei ein zweiter Lichtsensor so in einer senkrecht zu der Oberfläche stehenden, den Reflexionspunkt schneidenden Sekundärebene, die einen Winkel zwischen 80° und 100° zu der Einfallsebene aufweist, angeordnet wird, dass eine durch den Reflexionspunkt und den zweiten Lichtsensor verlaufende Gerade einen Winkel zu der Oberfläche aufweist, welcher im Wesentlichen so groß ist wie der Einfallswinkel bzw. der Ausfallswinkel.

Es wird vorgeschlagen, dass zur Bestimmung der Art der Oberfläche folgende Messschritte in beliebiger Reihenfolge ausgeführt werden: eine Messung der Lichtintensität mittels des ersten Lichtsensors und des zweiten Lichtsensors bei ausgeschalteter Lichtquelle, eine Messung der Lichtintensität mittels des ersten Lichtsensors bei eingeschalteter Lichtquelle und eine Messung der Lichtintensität mittels des zweiten Lichtsensors bei eingeschalteter Lichtquelle. Insgesamt werden so drei verschiedene Intensitäten innerhalb eines Messzyklus gemessen. In dem zuerst genannten Schritt wird die Lichtquelle ausgeschaltet und das diffuse Streulicht aufgrund der Umgebungsbeleuchtung gemessen. Hieraus ergibt sich:

$$I_{Umgebung} = I_1 = I_2$$

Während eines weiteren Messschrittes ist die Lichtquelle eingeschaltet und der erste Lichtsensor misst die Gesamtintensität aus dem Streulicht der Umgebung, dem Streulicht der Lichtquelle und dem reflektierten Lichtanteil der Lichtquelle. Hieraus ergibt sich:

$$I_3 = I_{Gesamt} = I_{Umgebung} + I_{diffus} + I_{reflektiert}$$

Während eines weiteren Messschrittes misst der zweite Lichtsensor bei eingeschalteter Lichtquelle das Streulicht der Umgebung und das Streulicht der Lichtquelle. Hieraus ergibt sich:

$$I_4 = I_{Umgebung} + I_{diffus}$$

Das daraus entstehende Gleichungssystem kann folgendermaßen aufgelöst werden:

$$I_{diffus} = I_4 - I_1$$

$$I_{reflektiert} = I_3 - I_4$$

Insgesamt können aus den drei Schritten des Messzyklus somit die aktuellen Lichtintensitäten des gestreuten Lichtes und des reflektierten Lichtes an der zu bestimmenden Oberfläche gemessen werden. Diese geben Aufschluss über die Art der Oberfläche.

Es wird vorgeschlagen, dass die von den Lichtsensoren gemessenen Lichtintensitäten mit entsprechenden Referenzintensitäten für bekannte Oberflächen verglichen werden. Die Referenzintensitäten sind dabei vorteilhaft in einem Speicher des erfindungsgemäßen Gerätes hinterlegt, so dass sie der Auswerteeinrichtung für einen Vergleich mit den gemessenen Lichtintensitäten zur Verfügung stehen. Sofern eine gemessene Lichtintensität einer hinterlegten Referenzintensität entspricht, kann auf die Art der Oberfläche geschlossen werden. Die Referenzintensitäten wurden vorteilhaft mit derselben optischen Messeinrichtung oder zumindest mit einer ähnlichen Messeinrichtung gemessen, so dass die Referenzintensitäten mit den aktuell gemessenen Lichtintensitäten vergleichbar sind. Vorteilhaft kann das Gerät, beispielsweise ein Reinigungsroboter, zum Aufnehmen von Referenzintensitäten auf unterschiedlichen Oberflächen innerhalb einer Wohnung platziert werden, wobei ein Messzyklus durchgeführt wird und manuell eine Information über die Art der gemessenen Oberfläche in dem Speicher des Gerätes hinterlegt wird. Sofern eine Messung beispielsweise auf einem Raumbereich mit Teppichboden durchgeführt wurde, kann der Nutzer des Reinigungsroboters den gespeicherten Lichtintensitäten, d. h. der gestreuten Lichtintensität und der reflektierten Lichtintensität die Information zuordnen, dass es sich bei der gemessenen Oberfläche um einen Teppichboden handelt. Gleiches kann dann mit weiteren Raumbereichen durchgeführt werden, welche Fliesen, Parkett, Kork, Laminat, PVC oder andere Bodenbeläge aufweisen.

Es wird des Weiteren vorgeschlagen, dass die Lichtquelle polychromatisches Licht emittiert, so dass sich - wie zuvor erläutert - voneinander unabhängige Intensitätswerte für verschiedene Lichtwellenlängen ergeben, die wiederum eine genauere Bestimmung der gemessenen Art der Oberfläche erlauben. Schließlich kann vorgesehen sein, dass das von der Oberfläche zu den Lichtsensoren gelangende Licht spektral gefiltert wird. Die unterschiedlichen Verfahrensabläufe ergeben sich dabei aus den in Bezug auf das erfindungsgemäße Gerät erläuterten Messaufbauten, wobei beispielsweise eine polychromatisches Licht emittierende Lichtquelle mit farbselektiven Filtern kombiniert wird oder eine gepulste RGB-Lichtquelle mit einem monochromatischen Empfänger kombiniert wird, welcher in unterschiedlichen Zeitabschnitten entsprechend Licht mit unterschiedlichen Wellenlängen empfängt.

Neben der vorgenannten Verwendung der optischen Messeinrichtung zur Bestimmung der Art der zu bearbeitenden Oberfläche kann die optische Messeinrichtung ebenso verwendet werden, einen Treppenabgang oder ähnliches zu erkennen. Mit zunehmendem Abstand der zu detektierenden Oberfläche zu der optischen Messeinrichtung wandert der Reflexionspunkt des von der Lichtquelle emittierten Lichtes aus dem Empfangsbereich des Lichtsensors heraus. Dadurch kann die Auswerte- und Steuereinrichtung des Gerätes darauf schließen, dass sich das Gerät vor einer nach unten führenden Treppe befindet.

Im Folgenden wird die Erfindung anhand eines Ausführungsbeispiels näher erläutert. Es zeigen:

Figur 1:     einen Saugroboter auf einer Oberfläche einer ersten Art,

Figur 2:     den Saugroboter auf einer Oberfläche einer zweiten Art,

Figur 3:     eine schematische Seitenansicht einer optischen Messeinrichtung (Prinzip-Skizze),

Figur 4:     eine dreidimensionale Ansicht der optischen Messeinrichtung.

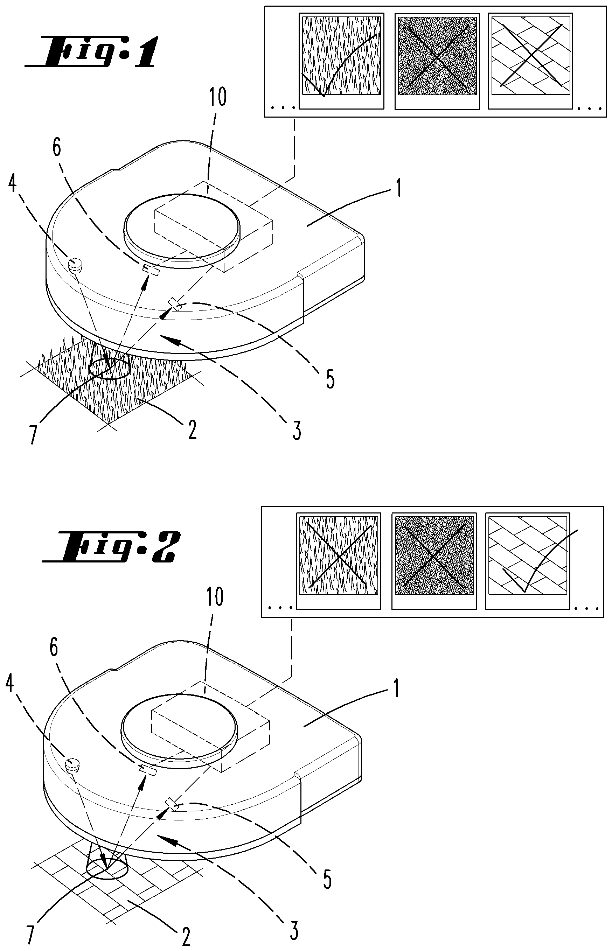

Figur 1 zeigt ein erfindungsgemäßes Gerät 1, welches hier als Wischroboter ausgebildet ist. Das Gerät 1 ist auf einer schematisch angedeuteten Oberfläche 2 positioniert, welche hier ein Teppich ist. Zur Erkennung der Art der Oberfläche 2 weist das Gerät 1 eine optische Messeinrichtung 3 auf, welche eine Lichtquelle 4, einen ersten Lichtsensor 5 sowie einen zweiten Lichtsensor 6 umfasst. Die vorgenannten Komponenten der optischen Messeinrichtung 3 sind so zueinander angeordnet, dass Licht, welches von der Lichtquelle 4 emittiert wird, an einem Reflexionspunkt 7 der Oberfläche 2 reflektiert wird und dann auf den ersten Lichtsensor 5 trifft. Der zweite Lichtsensor 6 ist nicht in der durch den ersten Lichtsensor 5, die Lichtquelle 4 und den Reflexionspunkt 7 aufgespannten Einfallsebene 8 angeordnet, sondern vielmehr in einer senkrecht dazu sowie zu der Oberfläche 2 angeordneten Sekundärebene 9.

Das Gerät 1 weist zudem eine Auswerte- und Steuereinrichtung 10 auf, welche zum einen die Funktionen der Lichtquelle 4 und der Lichtsensoren 5, 6 steuert, und zum anderen auf einen Speicher zugreift, welcher Referenzintensitäten zu bekannten Oberflächen aufweist. Wie schematisch dargestellt enthält der Speicher Referenzintensitäten zu Teppichböden, Holzböden, Fliesen und ähnliches. Anhand der mittels der Lichtsensoren 5, 6 gemessenen Lichtintensitäten erkennt die Steuer- und Auswerteeinrichtung 10, dass es sich bei der Oberfläche 2 um einen Teppichboden handelt.

Figur 2 zeigt das Gerät 1 auf einer anderen Oberfläche 2, nämlich hier einem Fliesenboden. Wie zuvor erläutert steuert die Steuer- und Auswerteeinrichtung 10 die optische Messeinrichtung 3 so, dass der erste Lichtsensor 5 und der zweite Lichtsensor 6 Lichtintensitäten messen, welche anschließend mit Referenzintensitäten verglichen werden können. Nach dem Vergleich kommt die Steuer- und Auswerteeinrichtung 10 hier zu dem Ergebnis, dass es sich bei der Oberfläche 2 um einen Fliesenboden handelt.

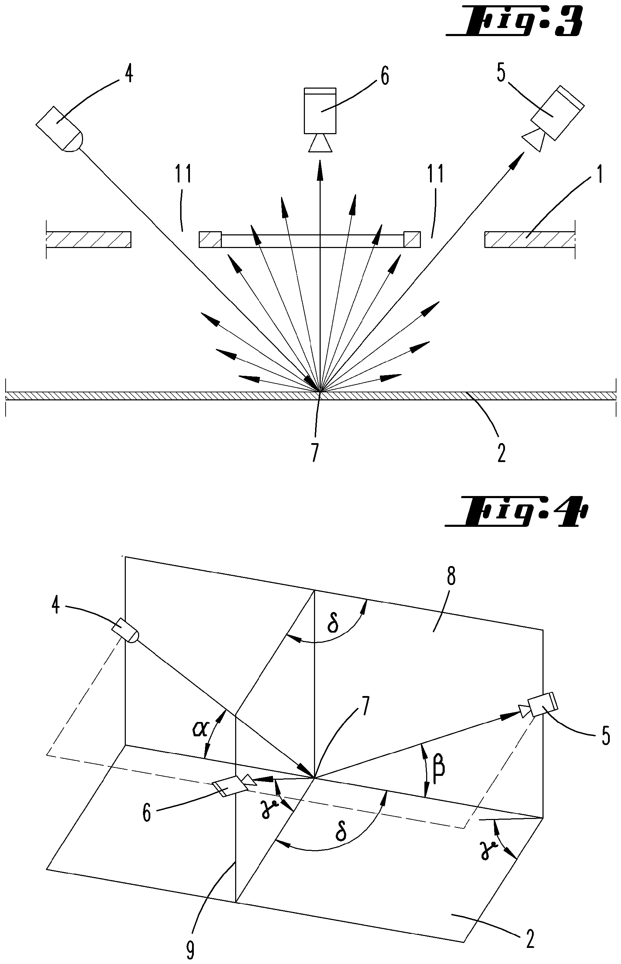

In Figur 3 ist in schematischer Seitenansicht die optische Messeinrichtung 3 gezeigt, welche den ersten Lichtsensor 5, den zweiten Lichtsensor 6 sowie die Lichtquelle 4 aufweist. Die Lichtquelle 4 sowie der erste Lichtsensor 5 sind nach dem Prinzip

„Einfallswinkel α = Ausfallswinkel β"

so angeordnet, dass von der Lichtquelle 4 emittiertes Licht an dem Reflexionspunkt 7 der Oberfläche 2 reflektiert wird und direkt auf den ersten Lichtsensor 5 trifft. In dem Gehäuse des Gerätes 1, dessen Unterseite hier dargestellt ist, sind entsprechende Öffnungen 11 zum Durchtritt des Lichtes ausgebildet. Neben dem reflektierten Lichtanteil existiert darüber hinaus ein diffus gestreuter Lichtanteil, dessen Intensität von der Beschaffenheit der Oberfläche 2 abhängt. Sofern es sich um eine raue, nicht spiegelnde Oberfläche 2 handelt, ist der gestreute Lichtanteil beispielsweise höher als im Falle einer glatten, spiegelnden Oberfläche 2. Der zweite Lichtsensor 6 ist zur Messung dieses gestreuten Lichtanteils nicht in der Einfallsebene 8 angeordnet, sondern in einer Sekundärebene 9, welche senkrecht zu der Einfallsebene 8 sowie senkrecht zu der Oberfläche 2 steht. Gegebenenfalls misst der zweite Lichtsensor 6 auch einen Anteil eines Umgebungslichtes, welches beispielsweise von einer Deckenbeleuchtung des Raumes stammt. Wie dargestellt sind der erste Lichtsensor 5 und der zweite Lichtsensor 6 vorteilhaft in einer gemeinsamen Ebene angeordnet, welche parallel zu der Oberfläche 2 ausgerichtet ist.

Figur 4 zeigt eine dreidimensionale Ansicht der optischen Messeinrichtung 3. Gezeigt ist die Einfallsebene 8, in welcher die Lichtquelle 4, der Reflexionspunkt 7 sowie der erste Lichtsensor 5 angeordnet sind. Dazu senkrecht steht die Sekundärebene 9, welche den zweiten Lichtsensor 6 sowie den Reflexionspunkt 7 schneidet. Darüber hinaus sind die Lichtquelle 4, der erste Lichtsensor 5 sowie der zweite Lichtsensor 6 in einer gemeinsamen Ebene angeordnet, welche parallel zu der Oberfläche 2 ausgerichtet ist. Der Einfallswinkel $\alpha$ des von der Lichtquelle 4 emittierten Lichtes auf der Oberfläche 2, der Ausfallswinkel $\beta$ sowie auch der Winkel $\gamma$ zwischen der Oberfläche 2 und einer durch den Reflexionspunkt 7 und den zweiten Lichtsensor 6 verlaufenden Gerade sind gleich groß. Zu erkennen ist, dass die Einfallsebene 8 und die Sekundärebene 9 in einem Winkel $\delta$ gleich 90 Grad zueinander angeordnet sind.

Zur Bestimmung der Art der Oberfläche 2 wird die optische Messeinrichtung 3 in einem Messzyklus betrieben, welcher drei unterschiedliche Messschritte beinhaltet. In einem ersten Messschritt ist die Lichtquelle 4 ausgeschaltet, sodass der erste Lichtsensor 5 und der zweite Lichtsensor 6 ausschließlich etwaiges Umgebungslicht detektieren. In einem zweiten Messschritt ist die Lichtquelle 4 eingeschaltet und die Lichtintensität wird ausschließlich mittels des ersten Lichtsensors 5 gemessen. In einem dritten Messschritt ist die Lichtquelle 4 ebenfalls eingeschaltet. Nun wird die Lichtintensität jedoch nur mittels des zweiten Lichtsensors gemessen. Obwohl die Messschritte hier mit 1, 2 und 3 bezeichnet sind, bedeutet dies nicht eine bestimmte Reihenfolge. Vielmehr ist es unerheblich, welcher der drei Messschritte zuerst durchgeführt wird, sofern die angegebenen Bedingungen in Bezug auf die Aktivität der Lichtquelle 4 bzw. der Lichtsensoren 5, 6 erfüllt sind.

In dem zuvor erläuterten ersten Messschritt wird mittels des ersten Lichtsensors 5 und des zweiten Lichtsensors 6 die Lichtintensität einer etwaigen Umgebungsbeleuchtung gemessen:

$$I_{Umgebung} = I_1 = I_2.$$

In dem erörterten zweiten Messschritt wird die Umgebungslichtintensität sowie zusätzlich die diffuse Streustrahlung und auch die von dem Reflexionspunkt 7 reflektierte Strahlung gemessen:

$$I_3 = I_{Gesamt} = I_{Umgebung} + I_{diffus} + I_{reflektiert}.$$

In dem dritten Messschritt wird schließlich die Intensität des Umgebungslichtes sowie die Intensität der diffusen Streustrahlung gemessen:

$$I_4 = I_{Umgebung} + I_{diffus}$$

Als Lösung des Gleichungssystems ergibt sich die Lichtintensität der diffusen Streustrahlung:

$$I_{diffus} = I_4 - I_1,$$

sowie die Lichtintensität der reflektierten Strahlung:

$$I_{reflektiert} = I_3 - I_4.$$

Diese Intensitäten können mit Referenzintensitäten bekannter Oberflächen 2 verglichen werden.

Die in einem Speicher des Gerätes 1 hinterlegten Referenzintensitäten sind beispielsweise Lichtintensitäten, welche bei einer entsprechenden Messung von Teppichboden, Parkett, Laminat, Fliesen usw. gemessen wurden. Die Auswerte- und Steuereinrichtung 10 des Gerätes 1 vergleicht diese Referenzintensitäten mit den aktuell durch die Lichtsensoren 5, 6 gemessenen Intensitäten und kann bei einer Übereinstimmung der Intensitätswerte auf die Art der aktuell unter dem Gerät 1 befindlichen Oberfläche 2 schließen. Hier kommt das Gerät 1 beispielsweise zu dem Ergebnis, dass es sich bei der zu bestimmenden Oberfläche 2 um einen Fliesenboden handelt.

Ergänzend zu den zuvor gemachten Ausführungen sei erwähnt, dass es sich in der Praxis bei dem sog. Reflexionspunkt 7 nicht um einen singulären Punkt handelt, sondern vielmehr um eine endlich ausgedehnte Fläche. Dies folgt allein daraus, dass es sich bei dem von der Lichtquelle 4 emittierten Licht um ein Lichtbündel handelt, welches einen endlichen Querschnitt aufweist und sich gegebenenfalls sogar in Propagationsrichtung aufweitet. Darüber hinaus sei erwähnt, dass es sich bei dem für die Bestimmung der Art der Oberfläche 2 benutzten Beleuchtungsmodell nach Phong selbstverständlich nicht um exakte Intensitätsberechnungen handelt, sondern vielmehr um ein empirisch gewonnenes Modell, welches die physikalischen Gegebenheiten innerhalb der optischen Messeinrichtung 3 nicht korrekt wiedergibt. Es hat sich jedoch gezeigt, dass die Bestimmung der Art der Oberfläche 2 nach diesem Modell zu einem zuverlässigen Ergebnis führt.

## Bezugszeichenliste

1    Gerät
2    Oberfläche
3    Messeinrichtung
4    Lichtquelle
5    Erster Lichtsensor
6    Zweiter Lichtsensor
7    Reflexionspunkt
8    Einfallsebene
9    Sekundärebene
10   Steuer- und Auswerteeinrichtung
11   Öffnungen

$\alpha$   Einfallswinkel
$\beta$   Ausfallswinkel
$\gamma$   Winkel
$\delta$   Winkel

## Patentansprüche

1.  Reinigungsgerät (1) zur Reinigung einer Oberfläche (2), wobei das Reinigungsgerät (1) eine optische Messeinrichtung (3) zur Bestimmung der Art der Oberfläche (2) aufweist, **dadurch gekennzeichnet, dass** die optische Messeinrichtung (3) eine Lichtquelle (4) und mindestens zwei Lichtsensoren (5, 6) aufweist, wobei die Lichtquelle (4) und ein erster Lichtsensor (5) so angeordnet sind, dass von der Lichtquelle (4) emittiertes Licht mit einem Einfallswinkel ($\alpha$) auf einen Reflexionspunkt (7) der Oberfläche (2) trifft und anschließend mit einem entsprechenden Ausfallswinkel ($\beta$) zu dem ersten Lichtsensor (5) reflektiert wird, wobei die Lichtquelle (4), der Reflexionspunkt (7) und der erste Lichtsensor (5) eine Einfallsebene (8) aufspannen, und wobei senkrecht zu der Oberfläche (2) eine den Reflexionspunkt (7) schneidende, einen zweiten Lichtsensor (6) aufweisende Sekundärebene (9) aufgespannt ist, die einen Winkel ($\delta$) zwischen 80° und 100° zu der Einfallsebene (8) aufweist, wobei eine durch den Reflexionspunkt (7) und den zweiten Lichtsensor (6) verlaufende Gerade einen Winkel ($\gamma$) zu der Oberfläche (2) aufweist, welcher im Wesentlichen so groß ist wie der Einfallswinkel ($\alpha$) bzw. der Ausfallswinkel ($\beta$).

2.  Gerät (1) nach Anspruch 1, **dadurch gekennzeichnet, dass** der Einfallswinkel ($\alpha$), der Ausfallswinkel ($\beta$) und der Winkel ($\gamma$) jeweils zwischen 30° und 45° betragen.

3.  Gerät (1) nach Anspruch 1 oder 2, **dadurch gekennzeichnet, dass** der Winkel ($\delta$) 90° beträgt.

4.  Gerät (1) nach einem der vorhergehenden Ansprüche, **dadurch gekennzeichnet, dass** die Lichtquelle (4) eine polychromatische Lichtquelle, insbesondere eine Weißlichtquelle, ist.

5. Gerät (1) nach einem der vorhergehenden Ansprüche, **dadurch gekennzeichnet, dass** die Lichtsensoren (5, 6) wellenlängenselektiv ausgebildet sind, insbesondere RGB-Sensoren sind.

6. Verfahren zur Reinigung einer Oberfläche (2) mittels eines Reinigungsgerätes (1) nach einem der vorhergehenden Ansprüche, wobei das Reinigungsgerät(1) die Art der Oberfläche (2) mittels einer optischen Messeinrichtung (3) bestimmt und abhängig davon die Art der Reinigung anpasst, **dadurch gekennzeichnet, dass** Licht innerhalb einer Einfallsebene (8) von einer Lichtquelle (4) unter einem Einfallswinkel ($\alpha$) auf einen Reflexionspunkt (7) der Oberfläche (2) gestrahlt wird und von dort mit einem entsprechenden Ausfallswinkel ($\beta$) zu einem ersten Lichtsensor (5) reflektiert wird, wobei ein zweiter Lichtsensor (6) so in einer senkrecht zu der Oberfläche (2) stehenden, den Reflexionspunkt (7) schneidenden Sekundärebene (9), die einen Winkel ($\delta$) zwischen 80° und 100° zu der Einfallsebene (8) aufweist, angeordnet wird, dass eine durch den Reflexionspunkt (7) und den zweiten Lichtsensor (6) verlaufende Gerade einen Winkel ($\gamma$) zu der Oberfläche (2) aufweist, welcher im Wesentlichen so groß ist wie der Einfallswinkel ($\alpha$) bzw. der Ausfallswinkel ($\beta$).

7. Verfahren nach Anspruch 6, **dadurch gekennzeichnet, dass** zur Bestimmung der Art der Oberfläche (2) folgende Messschritte ausgeführt werden:

   - Messung der Lichtintensität mittels des ersten Lichtsensors (5) und des zweiten Lichtsensor (6) bei ausgeschalteter Lichtquelle (4),
   - Messung der Lichtintensität mittels des ersten Lichtsensors (5) bei eingeschalteter Lichtquelle (4),
   - Messung der Lichtintensität mittels des zweiten Lichtsensors (6) bei eingeschalteter Lichtquelle (4).

8. Verfahren nach Anspruch 6, **dadurch gekennzeichnet, dass** die von den Lichtsensoren (5, 6) gemessenen Lichtintensitäten mit entsprechenden Referenzintensitäten für bekannte Oberflächen (2) verglichen werden.

9. Verfahren nach Anspruch 6 oder 7, **dadurch gekennzeichnet, dass** die Lichtquelle (4) polychromatisches Licht emittiert.

10. Verfahren nach einem der Ansprüche 6 bis 8, **dadurch gekennzeichnet, dass** das von der Oberfläche (2) zu den Lichtsensoren (5, 6) gelangende Licht spektral gefiltert wird.

**Claims**

1. A cleaning device (1) for cleaning a surface (2), wherein the cleaning device (1) has an optical measuring device (3) for determining the type of surface (2), **characterized in that** the optical measuring device (3) has a light source (4) and at least two light sensors (5, 6), wherein the light source (4) and a first light sensor (5) are arranged in such a way that light emitted by the light source (4) hits a reflection point (7) of the surface (2) at an angle of incidence ($\alpha$), and then is reflected to the first light sensor (5) at a corresponding angle of reflection ($\beta$), wherein the light source (4), the reflection point (7) and the first light sensor (5) span a plane of incidence (8), and wherein a secondary plane (9) that intersects the reflection point (7) and has a second light sensor (6) spans perpendicular to the surface (2), and exhibits an angle (6) of between 80° and 100° relative to the plane of incidence (8), wherein a straight line running through the reflection point (7) and the second light sensor (6) has an angle ($\gamma$) relative to the surface (2) that is essentially as large as the angle of incidence ($\alpha$) or angle of reflection ($\beta$).

2. The device (1) according to claim 1, **characterized in that** the angle of incidence ($\alpha$), the angle of reflection ($\beta$), and the angle ($\gamma$) each measure between 30° and 45°.

3. The device (1) according to claim 1 or 2, **characterized in that** the angle (6) measures 90°.

4. The device (1) according to one of the preceding claims, **characterized in that** the light source (4) is a polychromatic light source, in particular a white light source.

5. The device (1) according to one of the preceding claims, **characterized in that** the light sensors (5, 6) are wavelength selective in design, in particular RGB sensors.

6. A method for cleaning a surface (2) by means of a cleaning device (1) according to one of the preceding claims, wherein the cleaning device (1) determines the type of surface (2) with an optical measuring device and adjusts the type of cleaning as a function thereof, **characterized in that** light inside of a plane of incidence (8) is radiated at an angle of incidence ($\alpha$) from a light source (4) onto a reflection point (7) of the surface (2), and from there reflected with a corresponding angle of reflection ($\beta$) to a first light sensor (5), wherein a second light sensor (6) is arranged in a secondary plane (9) that stands perpendicular to the surface (2), intersects the reflection point (7), and has an angle (6) of between 80° and 100° to the plane of incidence (8) in such a way that a straight line running through the reflection point (7) and the second light sensor (6) has an angle ($\gamma$) to the surface (2) that is essentially as large as the angle of incidence ($\alpha$) or the angle of reflection ($\beta$).

7. The method according to claim 6, **characterized in that** the following measuring steps are implemented to determine the type of surface (2):

   - Measuring the light intensity with the first light sensor (5) and the second light sensor (6) with the light source (4) turned off,
   - Measuring the light intensity with the first light sensor (5) with the light source (4) turned on,
   - Measuring the light intensity with the second light sensor (6) with the light source (4) turned on.

8. The method according to claim 6, **characterized in that** the light intensities measured by the light sensors (5, 6) are compared with corresponding reference intensities for known surfaces (2).

9. The method according to claim 6 or 7, **characterized in that** the light source (4) emits polychromatic light.

10. The method according to one of claims 6 to 8, **characterized in that** light getting from the surface (2) to the light sensors (5, 6) is spectrally filtered.

## Revendications

1. Dispositif de nettoyage (1) pour nettoyer une surface (2), dans lequel le dispositif de nettoyage (1) comporte un dispositif de mesure optique (3) pour déterminer le type de la surface, **caractérisé en ce que** le dispositif de mesure optique (3) comprend une source de lumière (4) et au moins deux capteurs de lumière (5, 6), dans lequel la source de lumière (4) et un premier capteur de lumière (5) sont agencés de manière que de la lumière émise par la source de lumière (4) frappe un point de réflexion (7) de la surface (2) avec un angle d'incidence ($\alpha$), et est ensuite réfléchie avec un angle de réflexion correspondant ($\beta$) vers le premier capteur de lumière (5), dans lequel la source de lumière (4), le point de réflexion (7) et le premier capteur de lumière (5) définissent un plan d'incidence (8), et dans lequel est défini un plan secondaire (9) perpendiculaire à la surface (2), passant par le point de réflexion (7) et présentant un deuxième capteur de lumière (6) et qui présente un angle ($\delta$) compris entre 80° et 100° par rapport au plan d'incidence (8), dans lequel une droite passant par le point de réflexion (7) et le deuxième capteur de lumière (6) présente un angle ($\gamma$) par rapport à la surface (2), qui est sensiblement aussi grand que l'angle d'incidence ($\alpha$) et l'angle réfléchi ($\beta$), respectivement.

2. Dispositif (1) selon la revendication 1, **caractérisé en ce que** l'angle d'incidence ($\alpha$), l'angle de réflexion ($\beta$) et l'angle ($\gamma$) sont chacun compris entre 30° et 45°.

3. Dispositif (1) selon la revendication 1 ou 2, **caractérisé en ce que** l'angle ($\delta$) est de 90°.

4. Dispositif (1) selon l'une des revendications précédentes, **caractérisé en ce que** la source de lumière (4) est une source de lumière polychromatique, en particulier une source de lumière blanche.

5. Dispositif (1) selon l'une des revendications précédentes, **caractérisé en ce que** les capteurs de lumière (5, 6) sont sélectifs vis-à-vis des longueurs d'onde, et sont en particuliers des capteurs RVB.

6. Procédé de nettoyage d'une surface (2) au moyen d'un dispositif de nettoyage (1) selon l'une des revendications précédentes, dans lequel le dispositif de nettoyage (1) détermine le type de la surface (2) au moyen d'un dispositif de mesure optique (3) et adapte le nettoyage en fonction du type, **caractérisé en ce que** de la lumière est irradiée dans un plan d'incidence (8) à partir d'une source de lumière (4) selon un angle d'incidence ($\alpha$) jusque sur un point de réflexion (7) de la surface (2), et de là est réfléchie selon un angle de réflexion correspondant ($\beta$) vers un premier capteur de lumière (5), dans lequel un deuxième capteur de lumière (6) est agencé dans un plan secondaire (9) perpendiculaire à la surface (2) et passant par le point de réflexion (7), qui présente un angle ($\delta$) compris entre 80°

et 100° par rapport au plan d'incidence (8), **en ce qu'**une droite passant par le point (7) et le deuxième capteur de lumière (6) présente un angle ($\gamma$) par rapport à la surface (2), qui est sensiblement aussi grand que l'angle d'incidence ($\alpha$) et l'angle de réflexion ($\beta$), respectivement.

**7.** Procédé selon la revendication 6, **caractérisé en ce que** pour déterminer le type de la surface (2), les étapes de mesure suivantes sont exécutées :

- mesure de l'intensité lumineuse au moyen du premier capteur de lumière (5) et du deuxième capteur de lumière (6) lorsque la source de lumière (4) est éteinte,
- mesure de l'intensité lumineuse au moyen du premier capteur de lumière (5) lorsque la source de lumière (4) est allumée,
- mesure de l'intensité lumineuse au moyen du deuxième capteur de lumière (6) lorsque la source lumineuse (4) est allumée.

**8.** Procédé selon la revendication 6, **caractérisé en ce que** les intensités lumineuses mesurées par les capteurs de lumière (5, 6) sont comparées à des intensités de référence correspondantes pour des surfaces connues (2).

**9.** Procédé selon la revendication 6 ou 7, **caractérisé en ce que** la source de lumière (4) émet de la lumière polychromatique.

**10.** Procédé selon l'une des revendications 6 à 8, **caractérisé en ce que** la lumière atteignant les capteurs de lumière (5, 6) à partir de la surface (2) est filtrée spectralement.

Fig. 1

Fig. 2

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1677099 A
- US 5650702 A
- EP 2741483 A
- JP 2002174595 B